# EUROPÄISCHE PATENTANMELDUNG

(11) **EP 1 577 262 A1**
(43) Veröffentlichungstag der Anmeldung: **21.09.2005**
(21) Anmeldenummer: 05101689.7
(22) Anmeldetag: 04.03.2005
(51) Int. Cl.: C01B 31/22, B01J 19/06, F25J 1/02

(54) **Verfahren und Vorrichtung zur Herstellung fester Kohlendioxidpartikel**

(30) Priorität: 04.03.2004 DE 102004011194
(71) Anmelder: Messer Austria GmbH, 2352 Gumpoldskirchen (AT)
(72) Erfinder: Grohmann, Paul, 2352, Gumpoldskirchen (AT)
(74) Vertreter: Münzel, Joachim R.

(57) **Zusammenfassung**

Nach dem Stand der Technik wird festes Kohlendioxid durch Entspannung von flüssigem Kohlendioxid erzeugt. Nachteilig bei diesem Verfahren ist, dass die so erzeugten Kohlendioxidpartikel nur eine geringe Festigkeit aufweisen.

Erfindungsgemäß wird flüssiges Kohlendioxid in Form von Flüssigkeitströpfchen in eine verdichtete, tiefkalte Atmosphäre, vorzugsweise ein kryogenes Medium, wie kalter gasförmiger Stickstoff, eingetragen. Beim Kontakt der Kohlendioxidtröpfchen mit der tiefkalten Atmosphäre gefriert das Kohlendioxid zu festen Kohlendioxidpartikeln.

Die Festigkeit dieser Partikel ist sehr viel höher als die Festigkeit der nach dem bekannten Verfahren hergestellten Kohlendioxidpellets.

## Beschreibung

Die Erfindung betrifft ein Verfahren sowie eine Vorrichtung zur Herstellung fester Kohlendioxidpartikel.

Die Herstellung von festem Kohlendioxid (Trockeneis) erfolgt heute überwiegend durch Entspannung von flüssigem Kohlendioxid auf Atmosphärendruck. Ein Teil des Kohlendioxids gefriert dabei zu Schnee, ein weiterer Teil wird zu Kohlendioxidgas, das in die Atmosphäre abgegeben oder einem Verflüssigungskreislauf zugeführt wird. Dieses Verfahren wird beispielsweise in dem Buch von Klaus D. Krinninger: "Kohlendioxid-Kohlensäure-CO2", Verlag moderne Industrie, Landsberg /Lech 1996 beschrieben. Der entstehende Kohlendioxidschnee wird in Pelletiermaschinen zu gepressten Platten oder Zylindern mit einem typischen Durchmesser von 1 bis 5 mm verfestigt, wobei die Festigkeit je nach dem eingesetzten Verfestigungsverfahren unterschiedlich ist.

Die nach dem vorbekannten Verfahren hergestellten Pellets weisen den Nachteil auf, dass ihre mechanische Festigkeit auf Grund des Herstellungsverfahrens sehr niedrig ist.

Aufgabe der vorliegenden Erfindung ist daher, ein Verfahren und eine Vorrichtung zur Herstellung von Kohlendioxidpartikel mit hoher mechanischer Festigkeit anzugeben.

Gelöst ist diese Aufgabe durch ein Verfahren mit den Merkmalen des Patentanspruchs 1 sowie durch eine Vorrichtung mit den Merkmalen des Patentanspruchs 8.

Beim erfindungsgemäßen Verfahren zum Herstellen von Kohlendioxidpartikeln wird in einem Druckbehälter flüssiges Kohlendioxid verdüst. Dabei bilden sich Tröpfchen einer vorbestimmten durchschnittlichen Größe. In dem Druckbehälter liegt eine tiefkalte Atmosphäre vor, die das flüssige Kohlendioxid auf eine Temperatur unterhalb seines Schmelzpunktes abkühlt und zumindest teilweise zu festem Kohlendioxid gefriert. Die Festigkeit von auf diese Weise hergestelltem Kohlendioxid ist deutlich höher als die der Pellets nach dem Stande der Technik. Als "tiefkalt" wird hier eine Temperatur verstanden, bei der Kohlendioxid unter den im Druckbehälter vorliegenden Druckbedingen gefriert, vorzugsweise weist die Atmosphäre eine Temperatur auf, die niedriger als die jeweilige Schmelztemperatur ist.

Bevorzugt wird das flüssige Kohlendioxid vor der Zuführung zum Druckbehälter auf eine niedrige Temperatur oberhalb seines Tripelpunktes vorgekühlt, wobei die Temperatur so bemessen ist, dass das Kohlendioxid im flüssigen Zustand verbleibt.

Vorzugsweise weist die tiefkalte Atmosphäre beim Einbringen des flüssigen Kohlendioxids einen Druck auf, der zumindest annähernd dem Druck des zugeführten flüssigen Kohlendioxids entspricht. Beim Einbringen des flüssigen Kohlendioxids in die tiefkalte Atmosphäre findet also keine oder nur eine geringfügige Entspannung statt.

Eine bevorzugte Weiterbildung der Erfindung sieht vor, dass dem Druckbehälter zur Herstellung der tiefkalten Atmosphäre vorzugsweise Stickstoff oder Druckluft oder ein Gemisch aus beiden zugeführt wird.

Bevorzugt wird die Atmosphäre im Druckbehälter durch Wärmetausch mit einem kryogenen Medium, beispielsweise flüssiger oder tiefkalter gasförmiger Stickstoff, auf ihre tiefkalte Temperatur gebracht. Bei dem kryogenen Medium kann es sich insbesondere um tiefkalten Stickstoff handeln, der dem Druckbehälter gleichzeitig zur Herstellung der Atmosphäre zugeführt wird. Eine bevorzugte Temperatur, die zumindest während der Dauer der Zuführung des Kohlendioxids mittels einer geeigneten Regelung aufrechterhalten werden soll, liegt zwischen minus 170° C und minus 60°C, vorzugsweise sollten die Kohlendioxidpartikel auf eine Temperatur unterhalb des Sublimationspunktes von Kohlendioxid (minus 78,5°C) gebracht werden.

Eine bevorzugte Ausführungsform der Erfindung sieht vor, dass das flüssige Kohlendioxid vor der Zuführung in den Druckbehälter vorgekühlt wird.

Zweckmäßigerweise wird dies durch Wärmetausch mit einem kryogenen Medium erreicht; insbesondere eignet sich hierfür das kryogene Medium, das zur Kühlung der Atmosphäre im Druckbehälter verwendet wird.

Das erfindungsgemäße Verfahren wird vorzugsweise mittels einer in Patentanspruch 8 beanspruchten Vorrichtung durchgeführt. Die erfindungsgemäße Vorrichtung weist einen Druckbehälter auf, der mit einer Zuleitung für ein kryogenes Medium, beispielsweise flüssiger Stickstoff, sowie mit einer Zuleitung für flüssiges Kohlendioxid ausgerüstet ist. Die Flüssig-Kohlendioxid-Zuleitung mündet an einer Düse in das Innere des Druckbehälters ein.

Eine vorteilhafte Ausgestaltung der Erfindung sieht vor, dass die Flüssig-Kohlendioxid-Zuleitung mit einem Vorkühlaggregat verbunden ist. Auf diese Weise wird das flüssige Kohlendioxid in bereits vorgekühltem Zustand in den Druckbehälter eingebracht. Die Kühlung selbst erfolgt dabei zweckmäßigerweise durch Wärmetausch mit einem kyogenen Medium.

Um die Entnahme von frisch erzeugten Kohlendioxidpartikeln aus dem Druckbehälter auch bei laufendem Betrieb zu ermöglichen, ist der Druckbehälter in einer weiterführenden Ausgestaltung der Erfindung mit einer Druckschleuse zur Entnahme der erzeugten Kohlendioxidpartikel ausgerüstet. Die Druckschleuse kann dabei eine eine Schleusenanlage umfassen, die eine kontinuierliche und/oder batchweise Entnahme von Kohlendioxid ermöglicht.

Alternativ zur vorgenannten Druckschleuse ist in einer anderen vorteilhaften Ausgestaltung der Erfindung vorgesehen, dass der Druckbehälter mit einer Austrittsdüse versehen ist, durch die beim bestimmungsgemäßen Einsatz der Vorrichtung die erzeugten Kohlendioxidpartikel zugleich mit dem kryogenen Kältemittel ausgestoßen werden. Die Austrittsdüse ist dabei so konzipiert, dass im Innern des Druckbehälters durch den Zustrom an kryogenem Kältemittel ein bestimmter Druck, insbesondere ein Druck oberhalb des Tripelpunkts von Kohlendioxid, aufrechterhalten werden kann.

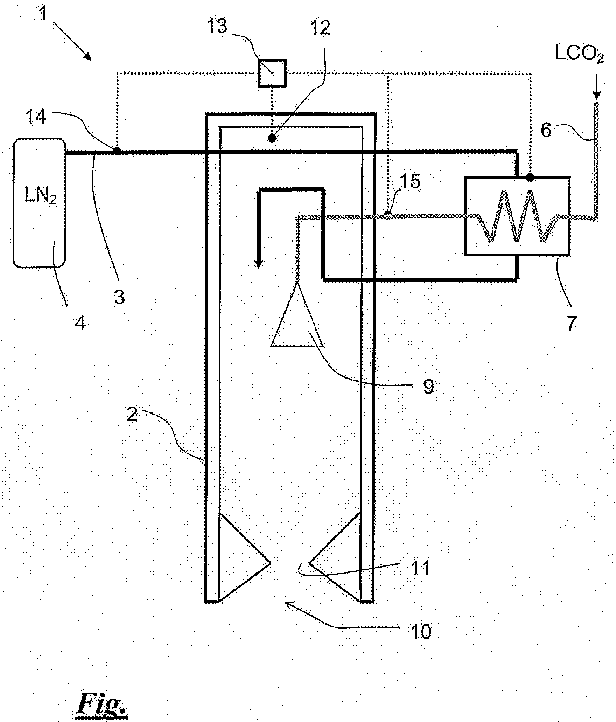

Ein Ausführungsbeispiel der Erfindung wird im Folgenden anhand der Zeichnung erläutert. Die einzige Zeichnung (Fig.) zeigt schematisch eine erfindungsgemäße Vorrichtung zum Erzeugen von Kohlendioxidpartikeln.

Die Vorrichtung 1 zum Erzeugen von Kohlendioxidpartikeln umfasst einen wärmeisolierten Druckbehälter 2, der mit einer Zuleitung 3 für ein kryogenes Medium, im Ausführungsbeispiel tiefkalter Stickstoff versehen ist. Die Zuleitung 3 ist in hier nicht weiter interessierender Weise mit einem Vorratsbehälter 4 für Flüssig-Stickstoff, beispielsweise einem Standtank, verbunden. Die Zuleitung 3 ist mit einer Isolierschicht versehen, die gewährleistet, dass der in der Zuleitung 3 zugeführte Stickstoff beim Erreichen des Druckbehälters 2 im flüssigen, zumindest aber in kaltem gasförmigem Zustand ist. Beim Einsatz von flüssigem Stickstoff verdampft dieser beim Eintritt in den Druckbehälter 2 und erzeugt auf diese Weise den gewünschten Druck im Druckbehälter 2.

In den Druckbehälter 2 mündet des Weiteren eine Druckzuleitung 6 für flüssiges Kohlendioxid ein. Das in der Druckzuleitung 6 herangeführte flüssige Kohlendioxid wird in einem Vorkühlaggregat 7 auf eine Temperatur oberhalb der Temperatur des Tripelpunkts (minus 56,6°C) abgekühlt und im flüssigen Zustand zum Druckbehälter 2 geleitet. Im Ausführungsbeispiel wird der durch die Zuleitung 3 herangeführte Stickstoff zur Kühlung des flüssigen Kohlendioxids im Vorkühlaggregat 7 eingesetzt. An der Mündungsöffnung der Druckzuleitung 6 im Innern des Druckbehälters 2 ist eine Sprühdüse 9 angeordnet, mittels der das in der Druckzuleitung 6 herangeführte flüssige Kohlendioxid zu Flüssigkeitströpfchen zersprüht wird.

Der Druckbehälter 2 ist an seinem den Zuleitungen 3,6 entgegen gesetzten Ende mit einer Austrittsöffnung 10 versehen, die eine düsenartige Verengung 11 aufweist. Ein Sensor 12 ermittelt innerhalb des Druckbehälters 2 vorliegende physikalische Parameter, wie Temperatur und/oder Druck. Der Sensor 12 steht mit einer Regeleinheit 13 in Datenaustausch, die wiederum Steuerbefehle an Ventile 14,15 zur Durchflussregulierung in den Zuleitungen 3, 6 sowie an das Vorkühlaggregat 7 abgibt.

Beim bestimmungsgemäßen Gebrauch der Vorrichtung strömt kalter Stickstoff, beispielsweise in einer Menge von 50 - 100 kg/h, bei einem Druck von etwa 10 bar durch die Zuleitung 3 in den Druckbehälter 2 ein. Zugleich wird flüssiges Kohlendioxid wird über die Druckzuleitung 6 und dem Vorkühlaggregat 7 dem Druckbehälter 2 zugeführt. Der Stickstoff verdampft vor Erreichen des Druckbehälters 2 oder beim Eintritt in den Druckbehälter 2; insbesondere kann der Stickstoff beim Wärmetausch mit dem flüssigen Kohlendioxid im Vorkühlaggregat 7 zumindest teilweise verdampfen und die dabei benötigte Verdampfungswärme dem in der Zuleitung 6 herangeführten flüssigen Kohlendioxid entzogen werden. Das im Innern des Druckbehälters 2 vorliegende Stickstoffgas strömt durch die Austrittsöffnung 10 aus dem Druckbehälter 2 aus. Die Verengung 11 in der Austrittsöffnung 10 ist so bemessen, dass - in Abhängigkeit von der zugeführten Stickstoffmenge - im Innern des Druckbehälters 2 ein Druck aufrechterhalten wird, der oberhalb des Tripelpunktes von Kohlendioxid liegt. Das flüssige Kohlendioxid wird im Vorkühlaggregat 7 in der oben beschriebenen Weise auf eine Temperatur von beispielsweise minus 20°C abgekühlt und unter einem Druck von beispielsweise 20 bar mit einer Menge von beispielsweise 10 kg/h dem Druckbehälter 2 zugeführt. Durch die Wirkung der Düse 9 tritt das flüssige Kohlendioxid in Form von Flüssigkeitströpfchen in den Druckbehälter 2 ein. Der Durchmesser dieser Flüssigkeitströpfchen hängt von der Art der gewählten Düse ab und beträgt beispielsweise 1 - 3 mm. Im Innern des Druckbehälters 2 geraten diese Flüssigkeitströpfchen in thermischen Kontakt mit der kalten Stickstoffatmosphäre und gefrieren zu festen Kohlendioxidpartikeln, die eine Temperatur von weniger als minus 60°C aufweisen. Die auf diese Weise hergestellten festen Kohlendioxidpartikel werden mit dem Stickstoff-Gasstrom durch die Austrittsöffnung 10 ausgetragen und einer weiteren Verwendung zugeführt. Die Regeleinrichtung 13 erfasst die vom Sensor 12 ermittelten Parameter und gibt, nach einem vorgegebenen Programm, Steuerbefehle an das Ventil 14 sowie an das Vorkühlaggegat 7 zur Regelung des Zuflusses und der Temperatur des zugeführten Stickstoffs und/oder an das Ventil 12 zur Regelung des Zuflusses von flüssigem Kohlendioxid.

Es ist im Rahmen der Erfindung auch vorstellbar, anstelle der Austrittsöffnung 10 eine Schleusenanordnung vorzusehen, mittels der die erzeugten Kohlendioxidteilchen batchweise oder kontinuierlich dem Druckbehälter 2 entnommen werden können In diesem Falle wäre zweckmäßigerweise zur Druckregulierung ein separates Ausströmventil für gasförmigen Stickstoff am Druckbehälter 2 vorzusehen.

### Bezugszeichenliste

- 1.: Vorrichtung
- 2.: Druckbehälter
- 3.: Zuleitung für Flüssig-Stickstoff
- 4.: Vorratsbehälter für Flüssig-Stickstoff
- 5.: -
- 6.: Druckzuleitung für Flüssig-Kohlendioxid
- 7.: Vorkühlaggregat
- 8.: -
- 9.: Sprühdüse
- 10.: Austrittsöffnung
- 11.: Verengung
- 12.: Sensor
- 13.: Regeleinrichtung
- 14.: Ventil
- 15.: Ventil

## Patentansprüche

1. Verfahren zum Herstellen von Kohlendioxidpartikeln, bei dem in einem Druckbehälter (2) flüssiges Kohlendioxid zu Tröpfchen mit einer vorbestimmten durchschnittlichen Tröpfchengröße verdüst und in eine verdichtete, tiefkalte Atmosphäre eingebracht wird, wobei das Kohlendioxid zumindest teilweise gefriert.

2. Verfahren nach Anspruch 1, **dadurch gekennzeichnet, dass** das flüssige Kohlendioxid vor seiner Zuführung zum Druckbehälter (2) auf eine Temperatur oberhalb der Temperatur des Tripelpunktes vorgekühlt wird.

3. Verfahren nach einem der vorhergehenden Ansprüche, **dadurch gekennzeichnet, dass** die Atmosphäre im Druckbehälter (2) beim Einbringen des flüssigen Kohlendioxids einen Druck aufweist, der zumindest annähernd dem Druck des zugeführten flüssigen Kohlendioxids entspricht.

4. Verfahren nach einem der vorhergehenden Ansprüche, **dadurch gekennzeichnet, dass** dem Druckbehälter (2) zur Herstellung der tiefkalten Atmosphäre Stickstoff oder Druckluft oder ein Gemisch von beiden zugeführt wird.

5. Verfahren nach einem der vorhergehenden Ansprüche, **dadurch gekennzeichnet, dass** die Atmosphäre im Druckbehälter (2) durch Wärmeaustausch mit einem kryogenen Medium, vorzugsweise kaltem gasförmigem oder flüssigem Stickstoff, auf ihre tiefkalte Temperatur gebracht wird.

6. Verfahren nach einem der vorhergehenden Ansprüche, **dadurch gekennzeichnet, dass** die Atmosphäre im Druckbehälter (2) zumindest während der Zuführung des Kohlendioxids auf eine Temperatur von weniger als minus 60°C, vorzugsweise weniger als minus 78,5°C Kohlendioxid eingeregelt wird.

7. Verfahren nach einem der vorhergehenden Ansprüche, **dadurch gekennzeichnet, dass** das flüssige Kohlendioxid vor der Zuführung zum Druckbehälter (2) durch Wärmetausch mit einem kryogenen Medium, insbesondere das zur Kühlung der Atmosphäre im Druckbehälter (2) eingesetzten Mediums, vorgekühlt wird.

8. Vorrichtung zur Durchführung des Verfahrens nach einem der vorhergehenden Ansprüche, mit einem Druckbehälter (2), in den eine Zuleitung (3) für ein kryogenes Medium sowie eine mit einer Düse (9) versehene Flüssig-Kohlendioxid-Zuleitung (6) einmündet.

9. Vorrichtung nach Anspruch 8, **dadurch gekennzeichnet, dass** die Flüssig-Kohlendioxid-Zuleitung (6) mit einem Vorkühlaggregat (7) strömungsverbunden ist.

10. Vorrichtung nach Anspruch 8 oder 9, **dadurch gekennzeichnet, dass** der Druckbehälter (2) mit einer Druckschleuse zur Entnahme der erzeugten Kohlendioxidpartikel ausgerüstet ist.

11. Vorrichtung nach Anspruch 8 oder 9, **dadurch gekennzeichnet, dass** der Druckbehälter (2) mit einer Austrittsdüse (11) versehen ist.
